# EUROPEAN PATENT SPECIFICATION

(11) **EP 2 337 141 B1**
(45) Date of publication and mention of the grant of the patent: **28.06.2017**
(21) Application number: 10195015.2
(22) Date of filing: 14.12.2010
(51) Int. Cl.: H01M 10/60

(54) **Cooling device for a vehicle drive battery and vehicle drive battery assembly having a cooling device.**
Kühlvorrichtung für eine Fahrzeugantriebsbatterie und Fahrzeugantriebsbatteriebaugruppe mit Kühlvorrichtung
Dispositif de refroidissement de véhicule pour batterie de commande de véhicule et ensemble de batterie de commande de véhicule doté d'un dispositif de refroidissement

(30) Priority: 18.12.2009 DE 102009058809
(43) Date of publication of application: 22.06.2011
(73) Proprietor: Valeo Klimasysteme GmbH, 96476 Rodach (DE)
(72) Inventor: Haussmann, Roland, 96476 Rodach (DE)
(74) Representative: Metz, Gaëlle

(56) References cited:
- EP-A1- 2 104 121
- DE-A1-102008 027 293
- DE-A1-102008 034 887
- US-A1- 2009 246 606

## Description

The invention relates to a cooling device for a vehicle drive battery having a plurality of cylindrical battery cells which are arranged one next to the other. Furthermore, the invention relates to a vehicle drive battery assembly having a cooling device according to the invention.

Vehicle drive batteries for purely electric vehicles, fuel cell vehicles or hybrid vehicles are the main focus of developments of vehicles which are driven by alternative means. The service life of the battery depends to a very great extent on the temperature loading of the battery cells during the charging and discharging processes. This relates in particular to lithium-ion batteries and NiMH batteries. In order to maintain the efficiency of the battery it is necessary to avoid the battery cells being heated or heating themselves above their maximum temperature of 45°C to 60°C.

A further cause of the reduction in the long-term efficiency is non-homogeneous temperature distribution from cell to cell. It is necessary to avoid a temperature difference of more than 5°C being able to occur between the cells here. In this context it is to be noted that the cells are usually connected in series, with the result that a defective cell can cause a total failure of the battery.

The invention relates in particular to a cooling device for a vehicle drive battery and to a vehicle drive battery assembly which have square-shaped battery cells. These novel battery cells are distinguished by the fact that their packing volume is very small compared to the previously customary circular-cylindrical battery cells.

Whereas in the case of the circular-cylindrical battery cells lamellar-shaped cooling plates are led around the lateral surface in order to cool the greatest possible proportion of the lateral surface, in the case of the square-shaped battery cells it is sufficient for cooling to occur on one of the flat sides, in particular on an end wall of the battery. Such cooling devices are described in documents DE102008027293, EP2104121, US2009/246606 and DE1020080348887.

The object of the invention is to provide a cooling device for a vehicle drive battery which is of simplified construction, as light in weight as possible and above all efficient, and a vehicle drive battery assembly which is distinguished by a high level of long-term efficiency by virtue of the good cooling of the battery.

This is achieved by means of a cooling device for a vehicle drive battery having a plurality of cylindrical, in particular square-shaped, battery cells which are arranged one next to the other and which have a lateral surface, an upper end wall and a lower end wall. The vehicle drive battery for the cooling device has a flat side. The cooling device itself comprises at least one cooling base which bears in a planar fashion against the flat side of the battery and has at least one coolant line, at least one heat-conducting contact plate for making contact with the flat side, and at least one fastening device for attaching the cooling base to the flat side of the vehicle drive battery. The contact plate has, along an axis running parallel to the flat side of the battery, a profile with a constant cross section, preferably an extrusion profile.

The term cylindrical is to be understood as meaning general geometrical cylindrical shapes. The battery cells are therefore not only restricted to circular-cylindrical shapes but rather can be embodied, in particular, in a square shape or in the shape of a prism.

The cooling device according to the invention comprises a cooling base which is used, in particular, for cooling the lower end walls of battery cells, which is, however, not the case in a restrictive fashion. Sections of the flat lateral surface sections could also equally well face the cooling base. Owing to the geometry of the profile of the contact plate it can easily be manufactured in a cost-effective way with a constant cross section, in particular by extrusion. The construction of the cooling base is very simple because it comprises, in its simplest embodiment, just one contact plate, one coolant line and one fastening device for attaching the cooling base to the flat side of the vehicle drive battery. The method of construction permits a cooling device with a low weight.

The cooling base should be a pre-fabricated, self-supporting unit. The contact plate has an edge profile at opposite edges, wherein the edge profiles of the contact plate are embodied so as to be complementary to one another in such a way that identical adjacent contact plates can engage with their edge profiles in one another in a positively locking fashion. On the one hand, such edge profiles reinforce the mechanical structure of the contact plate and, on the other hand, can be used to mount the fastening device. Edge profiles which are embodied so as to be complementary to one another permit an adjacent arrangement of a plurality of contact plates which engage with their edge profiles in one another in a positively locking fashion, as a result of which, in particular, a large cooling base which is composed of individual cooling bases is provided.

The contact plate can be embodied as to be deformable, in particular deformable in a spring-elastic fashion, in the region of at least one edge profile. The required force to deform the edge profile is preferably greater than a required force to deform the contact plate in the region of a contact upper side. In this way, fabrication tolerances of various components of the cooling device or of the vehicle drive battery, in particular of the fastening device, can be compensated.

The contact plate can have at least one axially running reinforcing fin, by which the mechanical stability of the cooling base is reinforced.

It is possible for the contact plate to have at least one closed cross section, at least in certain sections, wherein the closed cross section forms the at least one coolant line. In this way, it is not necessary to provide a separate component for the coolant line in the region of the contact plate, and the transmission of heat between the coolant in the coolant line and the contact plate is optimum.

Alternatively or additionally, the contact plate can have two heat-conducting fins on the side facing away from the battery, which heat-conducting fins are in heat-conducting contact with the coolant line and/or with a heating element in order to heat the battery when the ambient temperature is low, wherein the distance between the heat-conducting fins is preferably selected such that a pressing contact forms between the heat-conducting fins and the coolant line or the heating element. Such heat-conducting fins permit good heat-conducting contact between the contact plate and the coolant line or the heating element, which are embodied as separate components. Continuously good heat-conducting contact is ensured by the pressing contact between the heat-conducting fins and the coolant line. The heating element is, in particular, an electric heating element.

The heat-conducting fins are preferably at least partially deformed in order to permit positively locking fastening of the coolant lines and/or of the heating element. The positively locking connection improves the fastening of the coolant line or of the heating element to the contact plate, and the heat-conducting contact region between the coolant line or the heating element and heat-conducting fins is made larger.

According to one preferred embodiment, the fastening device permits direct fastening of the contact plate to the battery. The good transmission of heat between the flat side of the battery and the contact plate can easily be ensured by the direct fastening of the contact plate to the battery.

Alternatively, the fastening device has at least one fastening rail which extends at least partially along the edge region of the contact plate, wherein the contact plate is preferably connected in a positively locking fashion to the fastening rail. In this way, the material and the method of construction of the fastening rail can be optimized for the fastening function, while the contact plate can be optimized in terms of material and method of construction for its heat-conducting function. In particular, the cooling base can therefore be optimized for a relatively low overall weight.

In order to reduce the number of components of the cooling device, a common fastening rail can be provided which connects adjacent contact plates, preferably via the edge profiles thereof.

It is possible for the fastening rail to be embodied in a spring-elastic fashion, wherein the spring compression of the fastening rail permits a relative movement between the contact plate and the fastening rail, and preferably the required force to deform the fastening rail is greater than a required force to deform the contact plate in the region of a contact upper side. In this way, fabrication tolerances of various components of the cooling device or of the vehicle drive battery, in particular of the fastening device, can be compensated.

In order to prevent heat-insulating air gaps between the vehicle drive battery and the cooling base, which can occur, for example, owing to tolerances, the contact plate is preferably embodied in a spring-elastic fashion, and in the non-fastened state is embodied in a convex fashion with respect to the flat side of the battery. This permits the contact plate to bear, in the fastened state, in a planar and pre-stressed fashion against the flat side of the battery, as a result of which air gaps between the contact plate and the flat side of the battery are prevented.

A heat-insulating component can be provided which is arranged on that side of the contact plate which faces away from the battery, and which heat-insulating component is preferably connected in a positively locking fashion to the contact plate. Such a cooling device prevents transmission of heat between the contact plate and, for example, a common housing, lying on the outside, of the cooling device and the vehicle drive battery.

In order to cool the battery cells as uniformly as possible, the at least one contact plate can be connected to a feed line of the coolant line and to a return line of the coolant line, wherein, in particular, a plurality of contact plates are connected along a coolant line, in each case, to the feed line and to the return line of the coolant line. Since the coolant in the feed line increasingly picks up heat, in particular when there are a plurality of contact plates arranged along a coolant line, the cooling capacity of the coolant decreases along the coolant line, wherein the battery cells lying at the end of the feed line lie at the start of the return line. As a result of the simultaneous connection of a contact plate to the feed line and to the return line, the cooling capacity of the contact plate is an average cooling capacity of the feed line and of the return line, which applies, in particular, also when there are a plurality of contact plates along a coolant line.

A further idea for cooling the battery cells as uniformly as possible is to provide a coolant distributor, from which a plurality of coolant lines lead to separate contact plates, and from there to a collecting line. This means that a type of parallel connection of coolant lines is provided, said coolant lines being respectively assigned separate contact plates. The row or rows of battery cells which are assigned to a contact plate is/are therefore cooled just as well as the adjacent row or the groups of adjacent rows which are assigned to the adjacent contact plate. Furthermore, as a result of the parallel connection of the coolant lines, the lengths of the individual coolant lines are shortened, which reduces the time taken for the coolant to flow through a coolant line.

The coolant lines preferably run in a meandering shape or U-shape underneath the contact plates. A backpressure distributor or a venturi distributor may be provided as a feed line distributor.

In order to avoid soldered connections, feed lines and return lines can be connected to the coolant distributor or the collecting line in a positively locking fashion or frictionally locking fashion, for example by means of press ring connections.

In particular water, glycol, a water/glycol mixture or a refrigerant, here in particular R134a, HFO1234yf or R744, is used as the coolant.

Since the battery units which are used are often very large, it may be advantageous to use a plurality of contact plates. Adjacent contact plates can be connected directly to one another, in particular via their edge profiles which engage in one another in a positively locking fashion or via common fastening rails between two contact plates.

As already mentioned in the introduction, the invention also relates to a vehicle drive battery assembly having a vehicle drive battery with a plurality of battery cells and a cooling device according to the invention. The cooling device bears with its contact plate against the flat side of the battery in a pre-stressed fashion.

The contact plates can be embodied in different sizes.

A contact plate can be assigned in each case to a battery cell or a battery cell group. Conversely, this means that two contact plates do not extend over one battery cell or one battery cell group.

It would also be advantageous if, in particular, a plurality of battery cells were combined into one pre-fabricated unit in the form of a battery cell group. The battery in its entirety can optionally be formed from a plurality of battery cell groups. Not a plurality of contact plates, but rather just one contact plate, should be responsible for the cooling for each battery cell group. Alternatively, a plurality of contact plates are provided to form a common contact surface for at least one battery cell group.

In this context, a coolant inflow and a coolant return can be provided underneath each battery cell group, with the result that all the battery cells of a battery cell group are cooled essentially to the same temperature.

The cooling device should be positioned, in particular, on the side of the battery which faces away from the electrical terminals of the battery. If the upper end wall is that side on which the two poles of the battery are present, the lower end wall should therefore be the cooled side of the battery.

There are a plurality of different approaches for obtaining a uniform pressing force.

For example, the contact plate can be fastened to a housing of the battery and pressed against a flat side of the battery by the fastening. Here, the contact plate presses in an elastic fashion against the flat side of the battery, a base plate of the battery or directly against the battery cells.

Under certain circumstances, a base plate may be mechanically necessary, in particular when an assembly is formed, with the result that the base plate lies between the batteries and the contact plate or contact plates. The base plate should, of course, be composed of material which is a very good conductor of heat.

Another embodiment provides for a pressing plate to be positioned underneath the cooling base, which pressing plate is preferably fastened to the battery and compresses and elastically deforms the cooling base between the battery and the pressing plate by, as it were, a type of sandwich structure.

A part which is deformed in an elastic or plastic fashion is provided between the pressing plate and the contact plate in order to compensate tolerances in the direction of the flat side.

It is to be emphasized that the individual features above can, of course, be combined with one another in any desired fashion.

In the figures:
- Figure 1 shows a battery cell group of a vehicle drive battery assembly according to the invention;
- Figure 2 shows a schematic sectional view of a vehicle drive battery assembly according to the invention, together with a cooling device according to a first embodiment of the invention;
- Figure 3 shows a view of a detail of the connection of two adjacent contact plates according to Figure 2;
- Figure 4 shows a contact plate of the cooling device according to Figure 2;
- Figure 5 shows a view of a detail of a coolant line of the cooling device according to Figure 2;
- Figure 6a and Figure 6b each show a detailed sectional view of the coolant line at the contact plate according to two embodiments of the invention;
- Figure 7 shows a cooling device according to Figure 2 with four contact plates and coolant lines;
- Figure 8 shows a coolant line system of a cooling device according to the invention;
- Figure 9 shows a schematic sectional view of a vehicle drive battery assembly according to the invention, with a second embodiment of a cooling device according to the invention;
- Figure 10 shows a perspective view of a cooling base of the cooling device according to Figure 9;
- Figure 11 shows a perspective view of a cooling device according to Figure 9 with two cooling bases;
- Figure 12 shows a schematic sectional view of the cooling device from Figure 11;
- Figure 13 shows a perspective exploded view of a further cooling device that is not part of the present invention;
- Figure 14 shows a perspective view of the cooling device from Figure 13 that is not part of the invention;
- Figure 15 shows a sectional view of the fastening of a two-component housing to a battery cell assembly;
- Figure 16 shows a sectional view of an embodiment with a fastening rail which is embodied in a spring-elastic fashion;
- Figure 17 shows a sectional view of a further embodiment with a fastening rail which is embodied in a spring-elastic fashion;
- Figure 18 shows a sectional view of an embodiment with a contact plate with an edge profile which is embodied in a deformable fashion;
- Figure 19 shows a sectional view of a further embodiment with a contact plate with an edge profile which is embodied in a deformable fashion;
- Figure 20 shows a sectional view of a further embodiment with a contact plate with an edge profile which is embodied in a deformable fashion; and
- Figure 21 shows a sectional view of a further embodiment with a contact plate with an edge profile which is embodied in a deformable fashion.

Vehicle drive batteries serve as energy stores for driving electric motors, for example in electric vehicles or hybrid vehicles.

A vehicle drive battery is composed of a plurality of battery cells which are electrically coupled to one another. In order to permit easy handling of the vehicle drive battery, a plurality of battery cells may be arranged in one battery cell group, wherein a plurality of battery cell groups together form the vehicle drive battery.

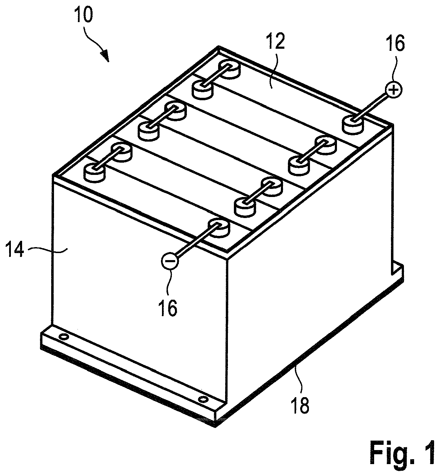

Figure 1 shows a battery cell group 10 in which six battery cells 12 are arranged in a common housing 14. The battery cells 12 are embodied in a square shape and have a lateral surface and an upper and a lower end wall.

In addition, the battery cells 12 are electrically connected to one another on the upper side of the battery cell group 10 and have a common electrical terminal 16. The underside of the battery cell group 10 is a flat side 18 which is embodied in a heat-conducting fashion and via which all the battery cells 12 of the battery cell group 10 can be cooled from the lower end walls of the cells.

Alternatively, other battery cell groups 10 or individual battery cells 12 may also be provided, for example battery cell groups 10 or battery cells 12 in which flat sides of the battery cells 12, that is to say for example the lower end walls of which, are themselves embodied in a heat-conducting fashion in order to cool the battery cell 12 individually.

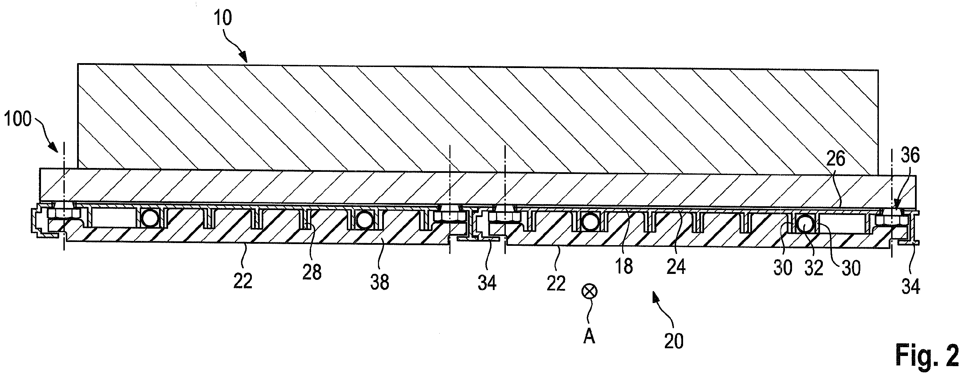

A cooling device 20 for cooling the battery cell group 10 of the vehicle drive battery is shown in a schematic sectional view in Figure 2. The cooling device 20 and the vehicle drive battery form, together with at least one battery cell assembly 10, a vehicle drive battery assembly 100.

The cooling device 20 comprises two cooling bases 22, which are arranged on the flat side 18 of the battery cell group 10. Each cooling base 22 has a contact plate 24 which has an extrusion profile which is embodied along an axis A running parallel to the flat side 18 of the battery cell assembly 10 and which has a constant cross section.

The contact plate 24 is composed of a material with a high thermal conductivity, for example aluminium or copper, with aluminium being preferred owing to its low weight.

The contact plate 24 comprises a contact upper side 26, with which the contact plate 24 bears against the flat side 18 of the battery. On the underside of the contact plate 24, which lies opposite the contact upper side 26, a plurality of axially running reinforcing fins 28 are provided which reinforce the contact plate 24, in particular, against bending with respect to the axial direction.

Furthermore, in each case pairs of heat-conducting fins 30 are provided which form securing means for, in each case, one coolant line 32. The heat-conducting fins 30 are embodied here in such a way that good transmission of heat is possible between the coolant line 32 and the contact surface 26 of the contact plate 24. Alternatively, it is, of course, also possible to provide further heat-conducting fins 30 which between them hold a heating element which serves to heat the battery. The heating element is to be fastened to the contact plate, like the coolant line 32.

The contact plate 24 has an edge profile 34 on the left-hand and right-hand edges of the contact plate 24. On the one hand, the two edge profiles 34 strengthen the mechanical structure of the contact plate 24 and, on the other hand, are embodied so as to be respectively complementary to one another, with the result that identical adjacent contact plates engage with their edge profiles 34 in one another in a positively locking fashion.

As a result of the positively locking engagement of the adjacent contact plates 24 in one another, the two contact surfaces 26 connect to form a large common contact surface in a flush fashion. In this way, a large common contact surface is provided, while the individual contact plates 24 are relatively small and can therefore be fabricated more easily by extrusion than correspondingly larger contact plates. In addition, a plurality of small contact plates 24 can be adapted more easily to the flat side 18 which is never completely planar.

The edge profiles 34 which bear one against the other on the contact plates 24 permit heat to be conducted between adjacent contact plates 24, as a result of which an average temperature and an average cooling capacity are established between adjacent contact plates 24.

In order to improve the transmission of heat between the coolant lines 32 and the heat-conducting fins 30, between adjacent contact plates 24 which bear one against the other via their edge profiles 34 in a positively locking fashion and/or between the contact upper side 26 of the contact plate 24 and the flat side 18 of the battery cell group 10, a heat-conducting paste may be provided between the corresponding components.

The contact plates 24 are connected via fastening devices 36 to the flat side 18 of the battery cell group 10. In the embodiment shown in Figure 2, the fastening devices 36 are screws with which the contact plates 24 are fastened directly to the flat side 18 of the battery cell group 10.

On that side of the contact plate 24 which lies opposite the battery cell group 10, a heat-insulating component 38 is provided which is connected in a positively locking fashion to the contact plate 24. For this purpose, the heat-insulating component 38 engages in the edge profiles 34 of the contact plate 24. Recesses are provided in the heat-insulating component 38 for the reinforcing fins 28, coolant lines 32 and heat-conducting fins 30, as well as the screws of the fastening devices 36. The heat-insulating component 38 can also be fastened to the contact plate 24 in another way, for example via the fastening devices 36.

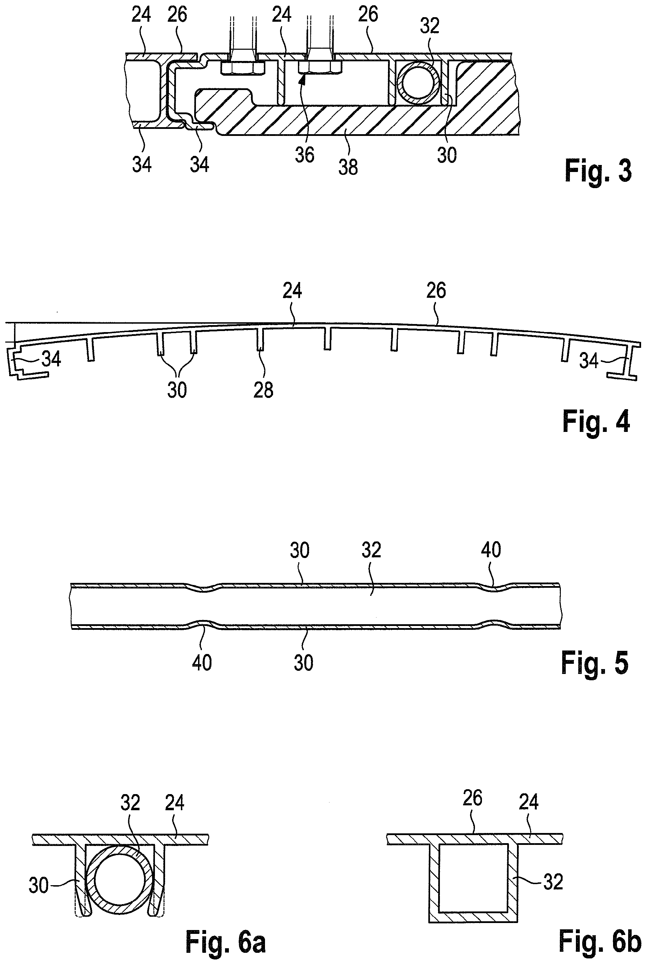

Figure 3 shows a view of a detail of the connecting point of the two adjacent contact plates 24 from Figure 2.

In this embodiment, the right-hand contact plate 24 has two fastening devices 36 which are arranged one next to the other and are in the form of screws.

The junction region between the contact surface 26 of the right-hand contact plate 24 and the contact surface 26 of the left-hand contact plate 24 is embodied in such a way that a common contact surface 26, with a flush junction, is formed.

The junction region between the two adjacent contact plates 24 can be embodied in a heat-conducting fashion in order to permit transmission of heat between the two contact plates 24. Alternatively, heat-insulating means may be provided in the junction region between the two adjacent contact plates 24, which heat-insulating means prevents or limits transmission of heat between the two contact plates 24.

Figure 4 shows the contact plate 24 without further components of the cooling device 20.

The contact plate 24 is embodied in a spring-elastic fashion, wherein, in the state in which it is not fastened to the flat side 18 of the battery cell group 10, the contact plate 24 is embodied so as to be convex with respect to the flat side 18 of the battery, and preferably with the same thickness. The contact surface 26 runs in a curved shape, wherein the central region of the contact plate 24 is, in particular, up to 5 mm higher than the lateral edge of the contact surface 26.

If the contact plate 24 which is shaped in such a way (as shown in Figure 2) is screwed onto the flat side 18 of the battery cell group 10 via the fastening devices 36, the contact plate 24 bears essentially in a planar fashion against the flat side 18 of the battery cell group 10, wherein the contact plate 24 is pre-stressed in an elastic fashion. In this way, air gaps between the contact plate 24 and the flat side 18 of the battery cell group 10 are prevented.

According to the embodiment shown in Figure 2, the coolant lines 32 are embodied as separate pipes, wherein the heat-conducting fins 30 form a securing means for the coolant lines 32.

Figure 5 shows a coolant line 32 which is surrounded on both sides by the heat-conducting fins 30 of the contact plate 24. The distance between the heat-conducting fins 30 is selected such that a pressing contact is formed between the heat-conducting fins 30 and the coolant line 32. By means of the pressing contact, the coolant line 32 is connected in a frictionally locking fashion to the contact plate 24, while at the same time transmission of heat is made possible via the pressing contact.

In the embodiment shown in Figure 5, two fastening points 40 are provided at which the heat-conducting fins 30 are deformed in the direction of the coolant line 32 in order to permit a positively locking connection between the coolant line 32 and the contact plate 24 at these fastening points 40.

Figure 6a shows a sectional view of a fastening point 40 in which the heat-conducting fins 30 are bent on both sides in the direction of the coolant line 32. It is also possible for just one of the heat-conducting fins 30 to be bent in the direction of the coolant line 32 or for the heat-conducting fins 30 to be bent along their entire length in the direction of the coolant line 32.

Figure 6b shows a second embodiment of the coolant line 32, wherein the coolant line 32 is formed by a closed cross section of the contact plate 24. As a result of the single-piece construction of the contact plate 24 and coolant line 32, optimum transmission of heat occurs between the coolant and the contact plate 24. The coolant line 32 which is embodied in a single piece is connected at the start and the end of the contact plate 24, for example by means of soldering, to a coolant circuit.

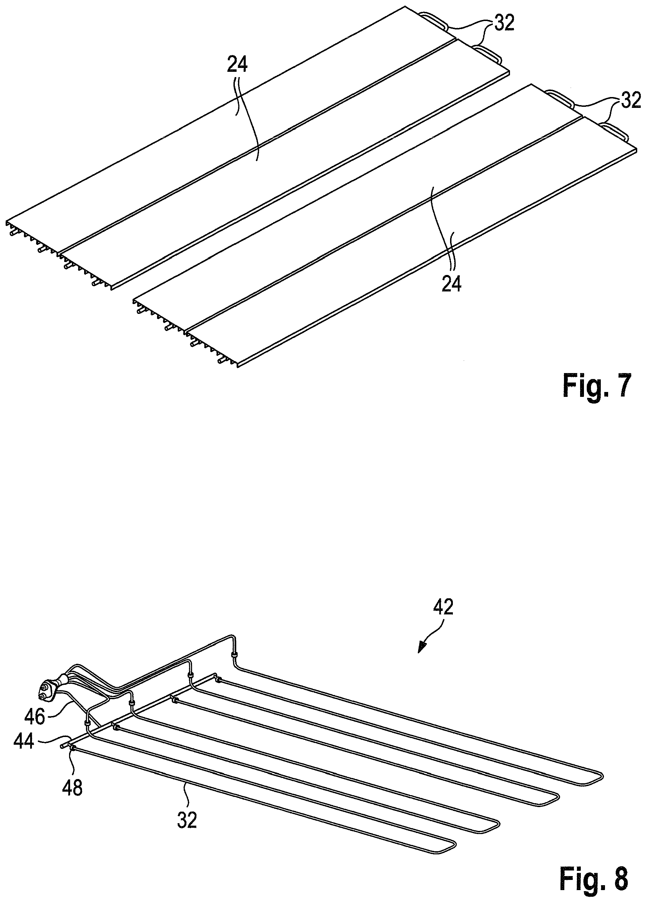

Figure 7 shows an embodiment of a cooling device 20 with four contact plates 24, wherein in each case two contact plates 24 bear directly on one another.

Each contact plate 24 is assigned a U-shaped coolant line 32. In a U-shaped coolant line 32, the feeding in and return of the coolant occurs in the runs of the coolant line 32 which run parallel to one another.

The coolant in the coolant lines 32 takes up heat, as it flows through the cooling bases 22, from the battery cell groups 10 which are to be cooled, as a result of which the coolant in the downstream sections of the coolant lines 32 permits a smaller cooling capacity than in the upstream sections of the coolant lines 32.

Since each contact plate 24 is in heat-conducting contact in each case with a feed line and a return line in a respective parallel coolant line 32, an average temperature and cooling capacity form along each of the contact plates 24.

Figure 8 shows by way of example a coolant line system 42 in which four coolant lines 32 are provided which run in parallel and which are connected via a coolant distributor 44, from which a plurality of coolant lines 32 lead to separate contact plates 24, and from there to a collecting line 46. The coolant circuit is closed by a refrigerating machine (not shown).

In the embodiment shown, four coolant lines 32 are provided which are connected in parallel and are each embodied in a U-shape, with a coolant feed line and coolant return line running in parallel. In each case two coolant lines 32 are each assigned to a feed line section and a return line section of a contact plate 24.

The coolant distributor 44 is, for example, a backpressure distributor or a venturi distributor.

The feed lines and return lines of the coolant line 32 are each mounted on the coolant distributor 44 and on the collecting line 46 in a positively locking fashion and frictionally locking fashion by means of press ring connections 48. In the press ring connections 48, the pipes which are to be connected are plugged one into the other and held together in a frictionally locking and/or positively locking fashion by means of a press ring. In this way there is no need for the pipe connections to be soldered.

The coolant which is directed through the coolant lines 32 may be a cooling fluid, in particular water, glycol or a water/glycol mixture, or a refrigerant, in particular R134a, HFO1234yf or R744.

In the embodiment shown, each contact plate 24 has a pair of feed line sections and return line sections of a coolant line 32. As a result of this parallel coolant line system 42, the individual coolant lines 32 are shorter, and coolant flows through more quickly, which shortens the reaction time of the cooling device 20 when changes in temperature occur.

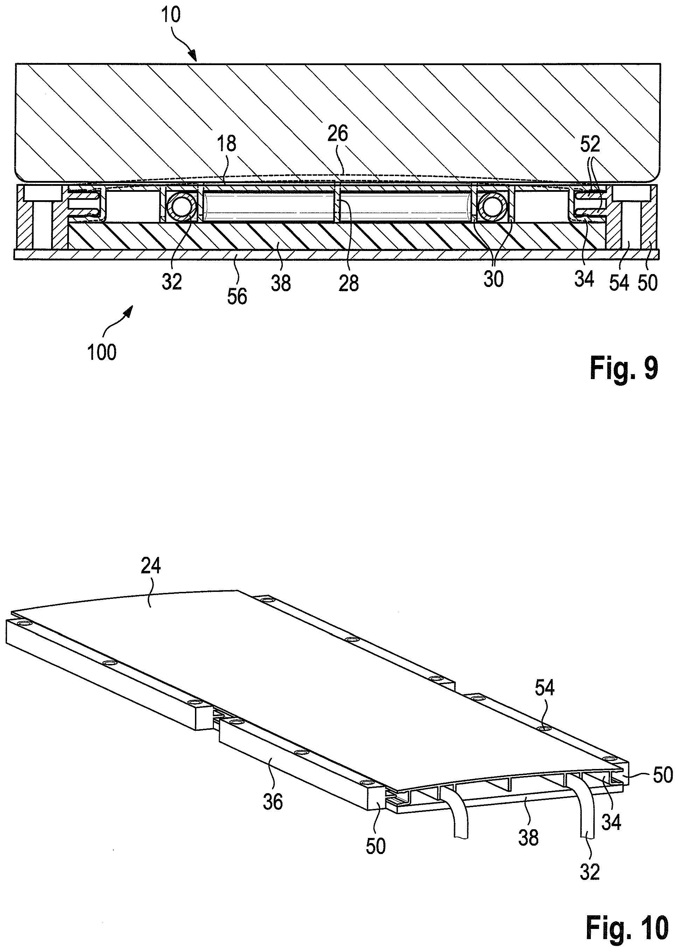

A second embodiment of a cooling base 22 is shown in Figure 9. The contact plate 24 is embodied, analogous to Figure 4, with a convexly curved contact surface 26 (shown in the non-pre-stressed state by the dashed line), which contact surface 26 bears, in the fastened state, flat against the flat side 18 of the battery cell group 10 in a pre-stressed fashion.

On that side of the contact plate 24 which faces away from the battery, a central reinforcing fin 28 and two pairs of heat-conducting fins 30 are provided for securing the coolant line 32.

The second embodiment of the contact plate 24 differs from the first embodiment essentially in having the edge profiles 34 and the fastening device 36.

The fastening devices 36 comprise fastening rails 50, which extend along the edge region of the contact plate 24. The fastening rails 50 each comprise two projections 52, with which the fastening rail 50 is connected in a positively locking fashion to the edge profile 34 of the contact plate 24. The projections 52 comprise latching noses which engage in the edge profile 34 of the contact plate 24.

The fastening rails 50 have a plurality of drilled holes 54 for fastening the cooling base 22 to the flat side 18 of the battery cell group 10, for example via screw connections. The fastening rails can, of course, also be fastened to the flat side of the battery cell assembly 10 in some other way.

Alternatively, the cooling base 22 is clamped between a pressing plate 56 and the flat side 18, wherein the fastening rails 50 define a fixed distance between the flat side 18 of the battery and the pressing plate 56. The pressing plate 56 presses the fastening rails 50 in the direction of the flat side 18 of the battery cell group 10, wherein the fastening rails 50 in turn press the contact plate 24 against the flat side 18 of the battery cell group 10 until the latter bears in a flat and pre-stressed fashion against the flat side 18. Corresponding screws are not shown.

The distance between the flat side 18 of the battery and the pressing plate 56 is configured such that a heat-insulating component 38 can be arranged between the pressing plate 56 and the contact plate 24 as well as the coolant line 32.

Figure 10 shows a perspective view of a cooling base 22 with a contact plate 24, on whose edge profiles 34 in each case two fastening rails 50 are arranged as a fastening device 36. In the embodiment shown, in each case a pair of fastening rails 50, which lie opposite one another, are assigned to a battery cell group 10. In the embodiment shown, two battery cell groups 10 are therefore assigned to one contact plate 24. It is also possible for the contact plates 24 to be embodied in their length in such a way that they are assigned to precisely one battery cell group 10.

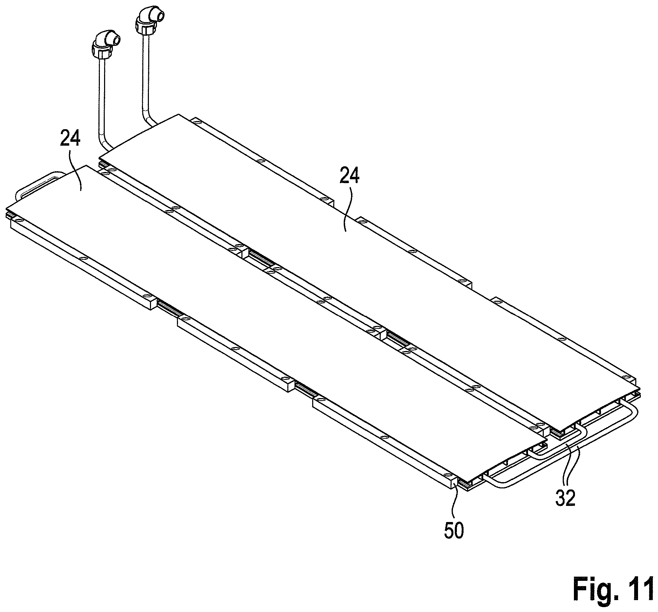

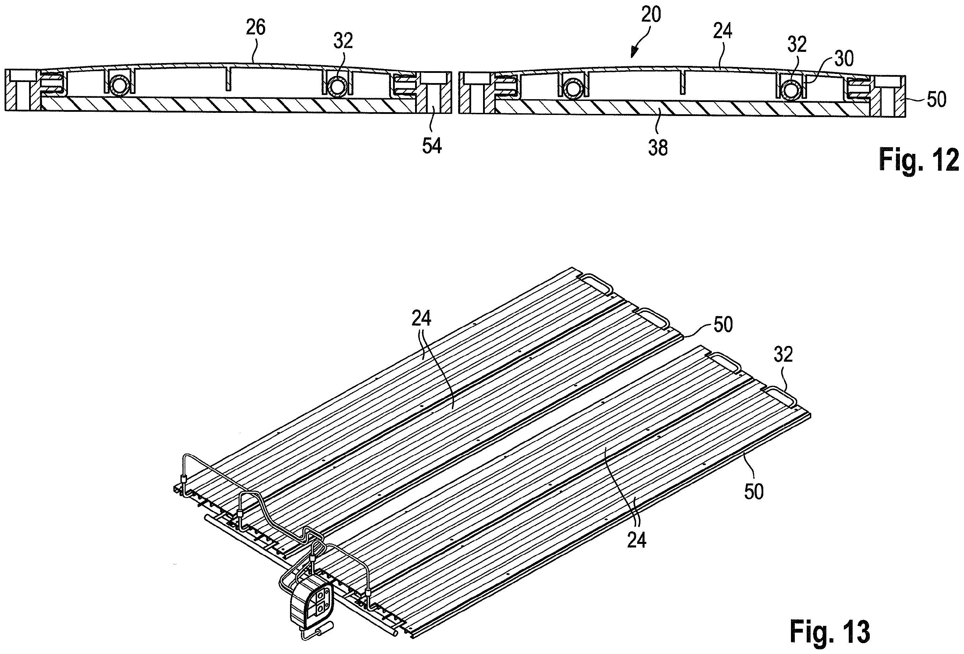

Figure 11 and Figure 12 show a further embodiment of a cooling device 20, wherein two contact plates 24 which lie one next to the other are arranged on a U-shaped coolant line 32. Three pairs of fastening rails 50 are assigned to each contact plate 24. The cooling device 20 is therefore provided for six battery cell groups 10. However, it is, for example, also possible for the cooling device 20 to be used for three battery cell assemblies 10, wherein one battery cell assembly 10 is then in contact with two adjacent contact plates 24 in each case.

In this embodiment, just one coolant line 32 is provided for both contact plates 24, and therefore there is no need for a coolant distributor 44 or a collecting line 46.

Figure 12 shows a sectional view of the cooling device 20 from Figure 11 with non-loaded contact plates 24.

The fastening rails 50 are each assigned to just one edge profile 34 of a contact plate 24. It is also possible for one fastening rail 50 to be provided which is designed for joint securement of two edge profiles 34 of two neighbouring contact plates 24.

Figure 13 shows a further embodiment of a cooling device 20 with a different arrangement of the cooling bases 22.

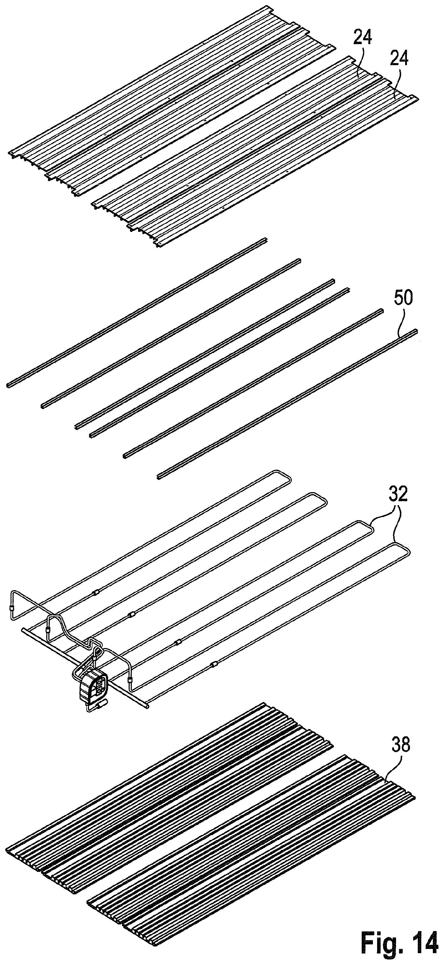

Figure 14 shows the same cooling device 20 in an exploded view.

Four contact plates 24 are provided which are connected via their edge profiles 34 to eight fastening rails 50. The fastening rails 50 extend in this embodiment over the entire length of the contact plates 24.

The contact plates 24 are connected to a coolant line system 42 which corresponds to the coolant line system 42 shown in Figure 8.

Four heat-insulating components 38 are provided underneath the contact plates 24 and the coolant lines 32.

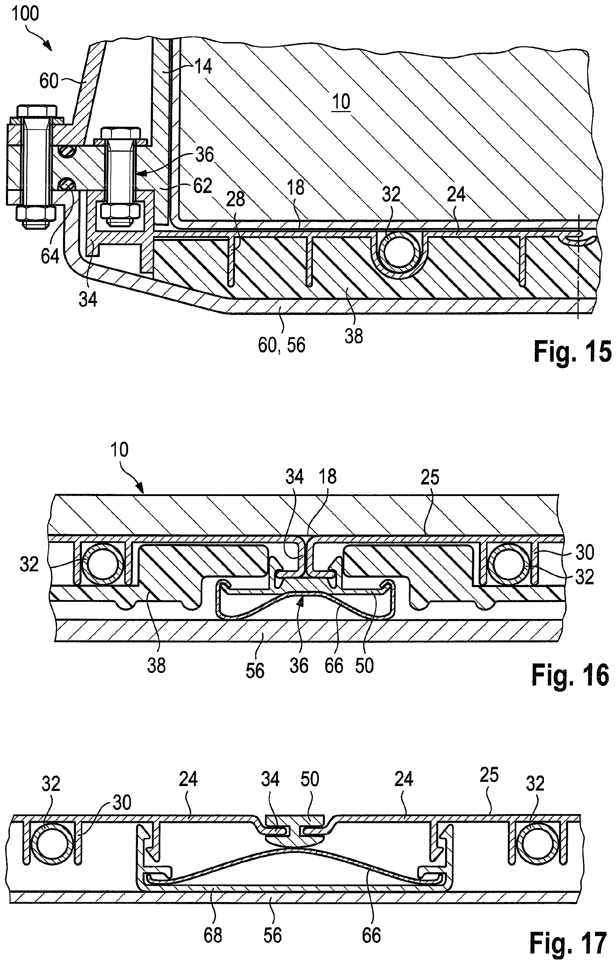

Figure 15 shows the fastening of a two-part battery housing 60 to a battery cell group 10 in a sectional view. The housing 14 of the battery cell group 10 has a fastening flange 62 to which, on the one hand, the contact plate 24 is fastened via a fastening device 36 in the form of a screw connection, and, on the other hand, the two parts of the battery housing 60 are fastened.

Seals 64 are provided between the battery housing and the fastening flange 62 of the housing of the battery cell assembly.

The contact plate 24 is essentially of analogous design to the preceding embodiments and differs only in the execution of the edge profile 34 and in the fact that the coolant line 32 is not fastened to the contact plate 24 by means of two heat-conducting fins but rather lies in a depression in the contact plate 24. The coolant line 32 has, in a way that is analogous to the heat-conducting fins of the preceding embodiments, a pressing connection to the contact plate 24. The coolant line 32 can also be pressed directly against the flat side 18 of the battery cell group 10.

Figure 16 shows a fastening clamp, here for example a fastening rail 50, in which two neighbouring contact plates 24 are held. The fastening rail 50 is pressed via the pressing plate 56 in the direction of the flat side 18 of the battery cell group 10 and itself presses the two contact plates 24 against the flat side 18. The fastening clamp enters, with its hook-shaped arms which protrude freely upwards, into a latching connection with the edges of the profiles 34.

As a result of fabrication tolerances of the pressing plate 56, inaccuracies occur in the distance between the pressing plate 56 and the flat side 18 of the battery cell assembly 10.

A part which, in the installed state, is deformed in an elastic or plastic fashion is provided between the pressing plate 56 and the contact plate 24 in order to compensate tolerances in the direction of the flat side. This part presses the two neighbouring edges of the adjacent contact plates 24 upwards.

The part here is also a spring 66 which is in the form of a clamp, for example U-shaped, and which presses the fastening rail 50 against the flat side 18 of the battery cell assembly 10. The spring 66 is plugged onto lateral arms of the fastening rail 50.

The spring strength of the spring 66 is selected such that the required force to deform the spring 66 is greater than the required force to deform a contact upper side 25 which is embodied in a spring-elastic fashion. This ensures that the contact plate 24 bears completely against the flat side 18 of the battery cell assembly 10 when the spring 66 experiences spring compression.

The spring 66 may extend essentially along the entire length of the fastening rail 50, or a plurality of individual springs 66 may be distributed along the length of the fastening rail.

Alternatively, the spring 66 can be replaced by a plastically deformable component which, before the mounting of the cooling device 20 and the vehicle drive battery, is set to a maximum distance between the pressing plate 56 and the flat side 18 of the battery cell group 10 and deforms during the mounting, in each case in accordance with the fabrication tolerances of the pressing plate 56.

Figure 17 shows a further embodiment of a deformable fastening rail 50 which is connected in a positively locking fashion to the contact plates 24. A securing part, in the example a rail component 68 which bears against the pressing plate 56, is connected in a positively locking fashion to the contact plates 24 via latching noses, wherein the connection has play which permits a relative movement of the contact plates 24 with respect to the rail component 68.

A spring 66, which pushes the contact plates 24 against the flat side 18 of the battery cell assembly 10, is provided between the fastening rail 50 and the rail component 68. The function of the spring 66 is analogous to the embodiment shown in Figure 16.

The spring 66 can in turn, in a way which is analogous to the embodiment shown in Figure 16, extend in certain sections or along the entire length of the fastening rail 50 or can alternatively be replaced by a plastically deformable component.

The securing component (rail component 68) forms a holding part for the spring 66, with the result that the contact plates 24, the fastening rail 50 and the spring 66 together with the securing component form one unit which can be mounted quickly.

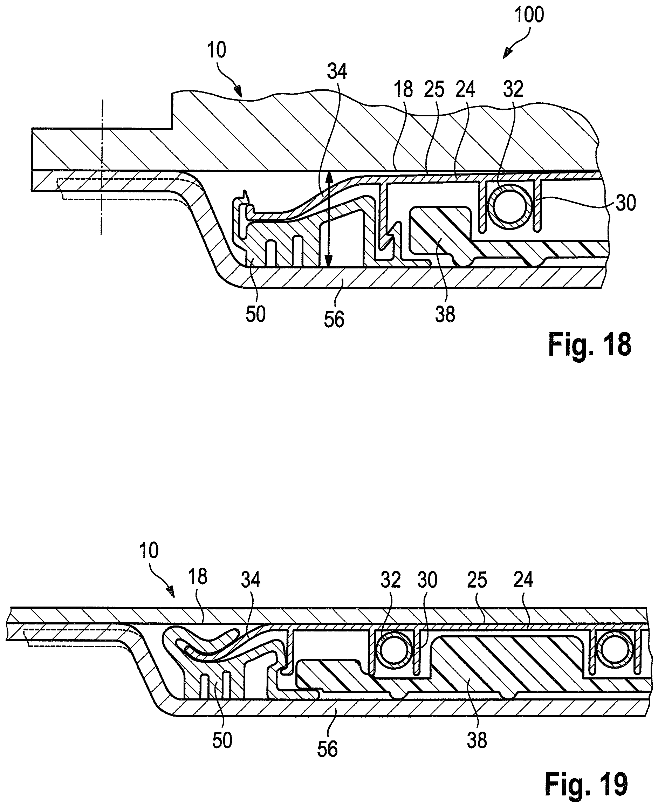

Figure 18 shows an embodiment with a contact plate 24 with a deformable edge profile 34. The edge profile 34 is fastened at its outer edge to a fastening rail 50 via a latching connection.

The contact plate 24 is embodied here in the region of the edge profile 34 in such a way that with the fastening rail 50 a maximum distance occurs between the pressing plate 56 and the flat side 18 of the battery cell group 10 (see arrow). During the mounting of the cooling device 20, the contact plate 24 deforms in the region of the edge profile 34 in order to adapt itself to the fabrication tolerances of the pressing plate 56.

The required force to deform the edge profile 34 (in a plastic or elastic fashion) is greater than the required force to deform the contact upper side 25 of the contact plate 24, which ensures that the contact upper side 25 of the contact plate 24 bears completely against the flat side 18.

Figure 19 shows a further embodiment which differs from the previously explained embodiment essentially in the fastening of the contact plate 24 to the fastening rail 50, wherein the contact plate 24 is plugged laterally into the fastening rail 50 in a positively locking fashion. A latching connection is also provided between the fastening rail 50 and the contact plate 24 here.

In Figure 18 and Figure 19, the second edge profile 34 (not shown) of the contact plate 24 is embodied in a way corresponding, for example, to the edge profile 34 shown. However, it is also possible for two neighbouring contact plates 24 to be provided which are embodied at the non-adjacent edge profiles in accordance with the embodiments shown in Figure 18 or 19 and are embodied at the neighbouring edge profiles 34 according to those in Figure 16 or 17.

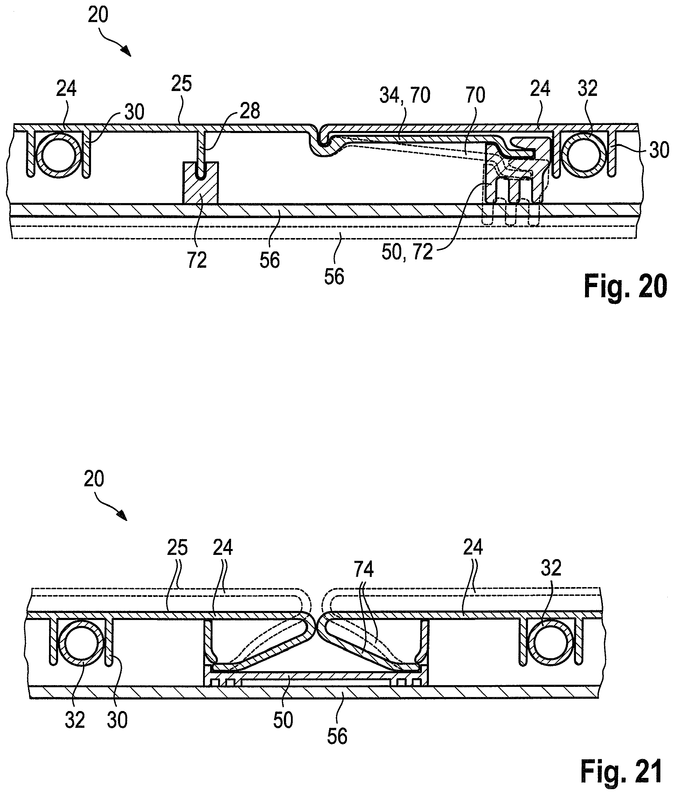

Figure 20 shows two contact plates 24 with adjacent edge profiles 34, wherein the edge profile 34 of the left-hand contact plate 24 is embodied so as to be deformable in the form of a lever 70 which is integrally moulded onto the contact plate 24 in a single piece. The edge profile 34 of the right-hand contact plate 24 is embodied so as to be non-deformable. The two edge profiles 34 engage in one another in a positively locking fashion.

The lever 70 engages with its edge in a positively locking fashion in a fastening rail 50 which is embodied as a spacer element 72 for maintaining the distance from the pressing plate 56. The spacer element 72 prevents heat-conducting contact between the contact plate 24 and the pressing plate 56.

In Figure 20, the lever 70 is shown with the spacer element 72 in a position of maximum distance between the pressing plate 56 and the flat side 18 of the battery cell assembly 10 by dotted lines. In this position, the pressing plate 56 exerts sufficient pressure on the spacer element 72 and the lever 70 to press the contact plates 24 completely against the flat side 18.

When the distance between the pressing plate 56 and the flat side 18 is reduced owing to fabrication tolerances, the lever 70 is located, with the spacer element 72, in, for example, the position shown by continuous lines.

A second spacer element 72, which predefines a minimum distance between the pressing plate 56 and the flat side, is provided on a reinforcing fin 28.

Figure 21 shows a further embodiment with a contact plate 24 which can be deformed in its edge region 34 in a plastic or elastic fashion and which is supported by a bent-over edge 74 on a fastening rail 50. Depending on the bending angle of the edge 74, the contact upper sides 25 are located at a different distance from the pressing plate 56, as a result of which tolerance compensation with respect to the pressing plate 56 is possible.

## Claims

1. Vehicle drive battery assembly (100) comprising a plurality of battery cells (12) and a cooling device (20) adapted for a vehicle drive battery having a plurality of cylindrical battery cells (12) which are arranged one next to the other and have a lateral surface, an upper end wall and a lower end wall, wherein the vehicle drive battery has a flat side (18), comprising: at least one cooling base (22) which bears in a planar fashion against the flat side (18) of the battery and has at least one coolant line (32), at least one heat-conducting contact plate (24) for making contact with the flat side (18), and at least one fastening device (36) for fastening the cooling base (22) to the flat side (18) of the vehicle drive battery, wherein the contact plate (24) has, along an axis running parallel to the flat side (18) of the battery, a profile with a constant cross section, preferably an extrusion profile and wherein
the contact plate (24) has an edge profile (34) at opposite edges, **characterized in that** the edge profiles (34) of the contact plate (24) are embodied so as to be complementary to one another in such a way that identical adjacent contact plates (24) can engage with their edge profiles (34) in one another in a positively locking fashion.

2. Vehicle drive battery assembly (100) according to Claim 1, **characterized in that** the contact plate (24) is embodied so as to be deformable, in particular deformable in a spring-elastic fashion, in the region of at least one edge profile (34).

3. Vehicle drive battery assembly (100) according to one of the preceding claims, **characterized in that** the contact plate (24) has at least one axially running reinforcing fin (28).

4. Vehicle drive battery assembly (100) according to one of the preceding claims, **characterized in that** the contact plate (24) has at least one closed cross section, at least in certain sections, wherein the closed cross section forms the at least one coolant line (32).

5. Vehicle drive battery assembly (100) according to one of the preceding claims, **characterized in that** the contact plate (24) has two heat-conducting fins (30) on the side facing away from the battery, which heat-conducting fins (30) are in heat-conducting contact with the coolant line (32) and/or with a heating element, wherein the distance between the heat-conducting fins (30) is preferably selected such that a pressing contact forms between the heat-conducting fins (30) and the coolant line (32) and/or a heating element.

6. Vehicle drive battery assembly (100) according to Claim 5, **characterized in that** the heat-conducting fins (30) are at least partially deformed in order to permit positively locking fastening of the coolant line (32) and/or of the heating element.

7. Vehicle drive battery assembly (100) according to one of the preceding claims, **characterized in that** the fastening device (36) permits direct fastening of the contact plate (24) to the battery.

8. Vehicle drive battery assembly (100) according to one of the preceding claims, **characterized in that** the fastening device (36) has at least one fastening rail (50) which extends at least partially along the edge region of the contact plate (24), wherein the contact plate (24) is preferably connected in a positively locking fashion to the fastening rail (50).

9. Vehicle drive battery assembly (100) according to Claim 8, **characterized in that** a common fastening rail (50) is provided which connects adjacent contact plates (24), preferably via the edge profiles (34) thereof.

10. Vehicle drive battery assembly (100) according to Claim 8 or 9, **characterized in that** the fastening rail (50) is embodied in a spring-elastic fashion in order to form a latching connection to adjacent contact plates (24).

11. Vehicle drive battery assembly (100) according to one of the preceding claims, **characterized in that** the contact plate (24) is embodied in a spring-elastic fashion, and in the non-fastened state is embodied in a convex fashion with respect to the flat side (18) of the battery.

12. Vehicle drive battery assembly (100) according to one of the preceding claims, **characterized in that** a heat-insulating component (38) is provided which is arranged on that side of the contact plate (24) which faces away from the battery, and which heat-insulating component (38) is preferably connected in a positively locking fashion to the contact plate (24).

13. Vehicle drive battery assembly (100) according to one of the preceding claims, **characterized in that** the at least one contact plate (24) is connected to a feed line of the coolant line (32) and to a return line of the coolant line (32), wherein, in particular, a plurality of contact plates (24) are connected along a coolant line (32), in each case, to the feed line and to the return line of the coolant line (32).

14. Vehicle drive battery assembly (100) according to one of the preceding claims, **characterized in that** a coolant distributor (44) is provided, from which a plurality of coolant lines (32) lead to separate contact plates (24), and from there to a collecting line (46).

15. Vehicle drive battery assembly (100) according to one of the preceding claims, wherein the cooling device (20) bears with the at least one contact plate (24) against the flat side (18) of the battery in a pre-stressed fashion.

16. Vehicle drive battery assembly (100) according to Claim 15, **characterized in that** only one contact plate (24) extends directly on the underside of, in each case, one battery cell (12) or one battery cell group (10), wherein a battery cell group (10) is a pre-fabricated unit which is composed of a plurality of battery cells (12).

17. Vehicle drive battery assembly (100) according to Claim 15 or 16, **characterized in that** a coolant inflow and a coolant return run along underneath each battery cell group (10), preferably underneath each battery cell (12).

18. Vehicle drive battery assembly (100) according to one of Claims 15 to 17 , **characterized in that** the cooling device (20) is arranged on a flat side (18), facing away from the electrical terminals of the battery, of the battery.

19. Vehicle drive battery assembly (100) according to one of Claims 15 to 18, **characterized in that** the contact plate (24) is fastened to a housing of the battery and is pressed against the flat side (18) of the battery by the fastening device (36), wherein the contact plate (24) preferably presses in an elastic fashion against the flat side (18) of the battery, a base plate of the battery or the battery cells (12).

20. Vehicle drive battery assembly (100) according to one of Claims 15 to 19, **characterized in that** a pressing plate (56) is provided underneath cooling base (22), which pressing plate (56) is preferably fastened to the battery and elastically deforms the cooling base (22) between the battery and the pressing plate (56).

21. Vehicle drive battery assembly (100) according to Claim 20 **characterized in that** a part which is deformed in an elastic or plastic fashion is provided between the pressing plate (56) and the contact plate (24) in order to compensate tolerances in the direction of the flat side (18).

## Patentansprüche

1. Fahrzeugantriebsbatteriebaugruppe (100) umfassend mehrere Batteriezellen (12) und eine Kühlvorrichtung (20) für eine Fahrzeugantriebsbatterie mit mehreren nebeneinander angeordneten, zylindrischen Batteriezellen (12) mit einer Mantelfläche, einer oberen Stirnwand und einer unteren Stirnwand, wobei die Fahrzeugantriebsbatterie eine Flachseite (18) aufweist, umfassend:
wenigstens einen Kühlboden (22), welcher an der Flachseite (18) der Batterie flächig anliegt und mindestens eine Kühlmittelleitung (32), mindestens eine wärmeleitende Kontaktplatte (24) zum Kontakt mit der Flachseite (18) und mindestens eine Befestigungsvorrichtung (36) zur Befestigung des Kühlbodens (22) an der Flachseite (18) der Fahrzeugantriebsbatterie aufweist,
wobei die Kontaktplatte (24) entlang einer parallel zur Flachseite (18) der Batterie verlaufenden Achse ein Profil mit konstantem Querschnitt, vorzugsweise ein Extrusionsprofil, aufweist und wobei die Kontaktplatte (24) an entgegengesetzten Rändern ein Randprofil (34) aufweist, **dadurch gekennzeichnet, dass** die Randprofile (34) der Kontaktplatte (24) so komplementär zueinander ausgebildet sind, dass gleiche, benachbarte Kontaktplatten (24) mit ihren Randprofilen (34) formschlüssig ineinandergreifen können.

2. Fahrzeugantriebsbatteriebaugruppe (100) gemäß Anspruch 1, **dadurch gekennzeichnet, dass** die Kontaktplatte (24) im Bereich mindestens eines Randprofils (34) verformbar, insbesondere federelastisch verformbar ausgebildet ist.

3. Fahrzeugantriebsbatteriebaugruppe (100) gemäß einem der vorhergehenden Ansprüche, **dadurch gekennzeichnet, dass** die Kontaktplatte (24) mindestens eine axial verlaufende Verstärkungsrippe (28) aufweist.

4. Fahrzeugantriebsbatteriebaugruppe (100) gemäß einem der vorhergehenden Ansprüche, **dadurch gekennzeichnet, dass** die Kontaktplatte (24) zumindest abschnittsweise mindestens einen geschlossenen Querschnitt aufweist, wobei der geschlossene Querschnitt die mindestens eine Kühlmittelleitung (32) bildet.

5. Fahrzeugantriebsbatteriebaugruppe (100) gemäß einem der vorhergehenden Ansprüche, **dadurch gekennzeichnet, dass** die Kontaktplatte (24) zwei Wärmeleitungsrippen (30) auf der von der Batterie abgewandten Seite aufweist, die in wärmeleitendem Kontakt mit der Kühlmittelleitung (32) und/oder einem Heizelement stehen, wobei der Abstand der Wärmeleitungsrippen (30) vorzugsweise so gewählt ist, dass sich ein Presskontakt zwischen den Wärmeleitungsrippen (30) und der Kühlmittelleitung (32) und/oder einem Heizelement bildet.

6. Fahrzeugantriebsbatteriebaugruppe (100) gemäß Anspruch 5, **dadurch gekennzeichnet, dass** die Wärmeleitungsrippen (30) zumindest teilweise umgeformt sind, um eine formschlüssige Befestigung der Kühlmittelleitung (32) und/oder des Heizelements zu ermöglichen.

7. Fahrzeugantriebsbatteriebaugruppe (100) gemäß einem der vorhergehenden Ansprüche, **dadurch gekennzeichnet, dass** die Befestigungsvorrichtung (36) eine unmittelbare Befestigung der Kontaktplatte (24) an der Batterie ermöglicht.

8. Fahrzeugantriebsbatteriebaugruppe (100) gemäß einem der vorhergehenden Ansprüche, **dadurch gekennzeichnet, dass** die Befestigungsvorrichtung (36) mindestens eine Befestigungsschiene (50) aufweist, die sich zumindest teilweise entlang des Randbereichs der Kontaktplatte (24) erstreckt, wobei die Kontaktplatte (24) vorzugsweise formschlüssig mit der Befestigungsschiene (50) verbunden ist.

9. Fahrzeugantriebsbatteriebaugruppe (100) gemäß Anspruch 8, **dadurch gekennzeichnet, dass** eine gemeinsame Befestigungsschiene (50) vorgesehen ist, welche benachbarte Kontaktplatten (24), vorzugsweise über deren Randprofile (34), verbindet.

10. Fahrzeugantriebsbatteriebaugruppe (100) gemäß Anspruch 8 oder 9, **dadurch gekennzeichnet, dass** die Befestigungsschiene (50) federelastisch ausgebildet ist, zur Bildung einer Rastverbindung mit benachbarten Kontaktplatten (24).

11. Fahrzeugantriebsbatteriebaugruppe (100) gemäß einem der vorhergehenden Ansprüche, **dadurch gekennzeichnet, dass** die Kontaktplatte (24) federelastisch und im nicht befestigten Zustand konvex zur Flachseite (18) der Batterie ausgebildet ist.

12. Fahrzeugantriebsbatteriebaugruppe (100) gemäß einem der vorhergehenden Ansprüche, **dadurch gekennzeichnet, dass** ein Wärmeisolierungsbauteil (38) vorgesehen ist, welches an der von der Batterie abgewandten Seite der Kontaktplatte (24) angeordnet ist und welches vorzugsweise formschlüssig mit der Kontaktplatte (24) verbunden ist.

13. Fahrzeugantriebsbatteriebaugruppe (100) gemäß einem der vorhergehenden Ansprüche, **dadurch gekennzeichnet, dass** die zumindest eine Kontaktplatte (24) mit einer Zuleitung der Kühlmittelleitung (32) und einer Rückleitung der Kühlmittelleitung (32) verbunden ist, wobei insbesondere mehrere Kontaktplatten (24) entlang einer Kühlmittelleitung (32) jeweils mit der Zuleitung und Rückleitung der Kühlmittelleitung (32) verbunden sind.

14. Fahrzeugantriebsbatteriebaugruppe (100) gemäß einem der vorhergehenden Ansprüchen, **dadurch gekennzeichnet, dass** ein Kühlmittelverteiler (44) vorgesehen ist, von dem aus mehrere Kühlmittelleitungen (32) zu eigenen Kontaktplatten (24) und von dort zu einer Sammelleitung (46) führen.

15. Fahrzeugantriebsbatteriebaugruppe (100) gemäß einem der vorhergehenden Ansprüche, wobei die Kühlvorrichtung (20) mit der mindestens einen Kontaktplatte (24) an der Flachseite (18) der Batterie vorgespannt anliegt.

16. Fahrzeugantriebsbatteriebaugruppe (100) gemäß Anspruch 15, **dadurch gekennzeichnet, dass** sich nur eine Kontaktplatte (24) unmittelbar unterseitig jeweils einer Batteriezelle (12) oder einer Batteriezellengruppe (10) erstreckt, wobei eine Batteriezellengruppe (10) eine aus mehreren Batteriezellen (12) zusammengesetzte, vorgefertigte Einheit ist.

17. Fahrzeugantriebsbatteriebaugruppe (100) gemäß Anspruch 15 oder 16, **dadurch gekennzeichnet, dass** unterhalb jeder Batteriezellengruppe (10), vorzugsweise unterhalb jeder Batteriezelle (12), ein Kühlmittel-Zulauf und ein Kühlmittel-Rücklauf entlangläuft.

18. Fahrzeugantriebsbatteriebaugruppe (100) gemäß einem der Ansprüche 15 bis 17, **dadurch gekennzeichnet, dass** die Kühlvorrichtung (20) an einer von den elektrischen Anschlüssen der Batterie abgewandten Flachseite (18) der Batterie angeordnet ist.

19. Fahrzeugantriebsbatteriebaugruppe (100) gemäß einem der Ansprüche 15 bis 18, **dadurch gekennzeichnet, dass** die Kontaktplatte (24) an einem Gehäuse der Batterie befestigt ist und durch die Befestigungsvorrichtung (36) gegen die Flachseite (18) der Batterie gepresst wird, wobei die Kontaktplatte (24) vorzugsweise elastisch gegen die Flachseite (18) der Batterie, eine Bodenplatte der Batterie oder der Batteriezellen (12) drückt.

20. Fahrzeugantriebsbatteriebaugruppe (100) gemäß einem der Ansprüche 15 bis 19, **dadurch gekennzeichnet, dass** unterhalb des Kühlbodens (22) eine Anpressplatte (56) vorgesehen ist, die vorzugsweise an der Batterie befestigt ist und durch die der Kühlboden (22) zwischen der Batterie und der Anpressplatte (56) elastisch deformiert ist.

21. Fahrzeugantriebsbatteriebaugruppe (100) gemäß Anspruch 20, **dadurch gekennzeichnet, dass** zum Toleranzausgleich in Richtung zur Flachseite (18) zwischen Anpressplatte (56) und Kontaktplatte (24) ein elastisch oder plastisch verformtes Teil vorgesehen ist.

## Revendications

1. Ensemble de batterie de commande de véhicule (100) comprenant une pluralité de cellules de batterie (12) et un dispositif de refroidissement (20) conçu pour une batterie de commande de véhicule ayant une pluralité de cellules de batterie (12) cylindriques agencées les unes à côté des autres et ayant une surface latérale, une paroi d'extrémité supérieure et une paroi d'extrémité inférieure, dans lequel la batterie de commande de véhicule a un côté plat (18), comprenant : au moins une base de refroidissement (22) qui appuie à plat le côté plat (18) de la batterie et a au moins une conduite de liquide de refroidissement (32), au moins une plaque de contact thermoconductrice (24) pour établir le contact avec le côté plat (18) et au moins un dispositif de fixation (36) pour fixer la base de refroidissement (22) au côté plat (18) de la batterie de commande de véhicule, dans lequel la plaque de contact (24) a, le long d'un axe s'étendant parallèlement au côté plat (18) de la batterie, un profil de section transversale constante, de préférence un profil extrudé et dans lequel :
la plaque de contact (24) a un profil d'arête (34) au niveau des arêtes opposées, **caractérisé en ce que** les profils d'arête (34) de la plaque de contact (24) sont réalisés de façon à être complémentaires les uns par rapport aux autres de telle sorte que des plaques de contact (24) adjacentes identiques puissent s'engrener l'une dans l'autre avec leurs profils d'arête (34) par verrouillage positif.

2. Ensemble de batterie de commande de véhicule (100) selon la revendication 1, **caractérisé en ce que** la plaque de contact (24) est réalisée de façon à être déformable, notamment déformable de façon élastique en ressort, dans la région d'au moins un profil d'arête (34).

3. Ensemble de batterie de commande de véhicule (100) selon l'une quelconque des revendications précédentes, **caractérisé en ce que** la plaque de contact (24) a au moins une ailette (28) de renfort s'étendant dans le plan axial.

4. Ensemble de batterie de commande de véhicule (100) selon l'une quelconque des revendications précédentes, **caractérisé en ce que** la plaque de contact (24) a au moins une section transversale fermée, au moins dans certaines sections, dans lequel la section transversale fermée forme l'au moins une conduite de liquide de refroidissement (32).

5. Ensemble de batterie de commande de véhicule (100) selon l'une quelconque des revendications précédentes, **caractérisé en ce que** la plaque de contact (24) a deux ailettes thermoconductrices (30) sur la face s'écartant de la batterie, lesdites ailettes thermoconductrices (30) étant en contact thermoconducteur avec la conduite de liquide de refroidissement (32) et/ou avec un élément de chauffage, dans lequel la distance entre les ailettes thermoconductrices (30) est de préférence sélectionnée de façon à former un contact comprimant entre les ailettes thermoconductrices (30) et la conduite de liquide de refroidissement (32) et/ou un élément de chauffage.

6. Ensemble de batterie de commande de véhicule (100) selon la revendication 5, **caractérisé en ce que** les ailettes thermoconductrices (30) sont au moins en partie déformées afin de permettre une fixation par verrouillage positif de la conduite de liquide de refroidissement (32) et/ou de l'élément de chauffage.

7. Ensemble de batterie de commande de véhicule (100) selon l'une quelconque des revendications précédentes, **caractérisé en ce que** le dispositif de fixation (36) permet de fixer directement la plaque de contact (24) à la batterie.

8. Ensemble de batterie de commande de véhicule (100) selon l'une quelconque des revendications précédentes, **caractérisé en ce que** le dispositif de fixation (36) a au moins un rail de fixation (50) qui s'étend au moins en partie le long de la région d'arête de la plaque de contact (24), dans lequel la plaque de contact (24) est de préférence reliée selon un verrouillage positif au rail de fixation (50).

9. Ensemble de batterie de commande de véhicule (100) selon la revendication 8, **caractérisé en ce qu'**un rail de fixation (50) commun est prévu, celui-ci reliant des plaques de contact (24) adjacentes, de préférence via les profils d'arête (34) correspondants.

10. Ensemble de batterie de commande de véhicule (100) selon la revendication 8 ou 9, **caractérisé en ce que** le rail de fixation (50) est réalisé de façon élastique par ressort afin de former une connexion verrouillée avec les plaques de contact (24) adjacentes.

11. Ensemble de batterie de commande de véhicule (100) selon l'une quelconque des revendications précédentes, **caractérisé en ce que** la plaque de contact (24) est réalisée de façon élastique en ressort et est réalisée dans l'état non fixé de façon convexe par rapport au côté plat (18) de la batterie.

12. Ensemble de batterie de commande de véhicule (100) selon l'une quelconque des revendications précédentes, **caractérisé en ce qu'**un composant thermo-isolant (38) est prévu, celui-ci étant agencé sur le côté de la plaque de contact (24) qui s'écarte de la batterie et ledit composant thermo-isolant (38) étant de préférence relié par verrouillage positif à la plaque de contact (24).

13. Ensemble de batterie de commande de véhicule (100) selon l'une quelconque des revendications précédentes, **caractérisé en ce que** l'au moins une plaque de contact (24) est reliée à une conduite d'alimentation de la conduite de liquide de refroidissement (32) et à une ligne de retour de la conduite de liquide de refroidissement (32), dans lequel, notamment, une pluralité de plaques de contact (24) sont reliées, le long d'une conduite de liquide de refroidissement (32), dans chacun des cas à la conduite d'alimentation et à la ligne de retour de la conduite de liquide de refroidissement (32).

14. Ensemble de batterie de commande de véhicule (100) selon l'une quelconque des revendications précédentes, **caractérisé en ce qu'**un distributeur de liquide de refroidissement (44) est prévu à partir duquel une pluralité de conduites de liquide de refroidissement (32) conduisent à des plaques de contact (24) séparées et de là à une conduite de collecte (46).

15. Ensemble de batterie de commande de véhicule (100) selon l'une quelconque des revendications précédentes, dans lequel le dispositif de refroidissement (20) appuie de façon précontrainte avec l'au moins une plaque de contact (24) contre le côté plat (18) de la batterie.

16. Ensemble de batterie de commande de véhicule (100) selon la revendication 15, **caractérisé en ce que** seule une plaque de contact (24) s'étend directement sur le côté inférieur de, dans chacun des cas, une cellule de batterie (12) ou un groupe de cellules de batterie (10), dans lequel un groupe de cellules de batterie (10) est une unité préfabriquée composée d'une pluralité de cellules de batterie (12).

17. Ensemble de batterie de commande de véhicule (100) selon la revendication 15 ou 16, **caractérisé en ce qu'**un flux entrant de liquide de refroidissement et un retour de liquide de refroidissement circulent sous chaque groupe de cellules de batterie (10), le long de celui-ci, de préférence sous chaque cellule de batterie (12).

18. Ensemble de batterie de commande de véhicule (100) selon l'une quelconque des revendications 15 à 17, **caractérisé en ce que** le dispositif de refroidissement (20) est agencé sur un côté plat (18), s'écartant des bornes électriques de batterie, de la batterie.

19. Ensemble de batterie de commande de véhicule (100) selon l'une quelconque des revendications 15 à 18, **caractérisé en ce que** la plaque de contact (24) est fixée à un boîtier de la batterie et est comprimée contre le côté plat (18) de la batterie par le biais du dispositif de fixation (36), dans lequel la plaque de contact (24) appuie de préférence de façon élastique contre le côté plat (18) de la batterie, une plaque de base de la batterie ou les cellules de batterie (12).

20. Ensemble de batterie de commande de véhicule (100) selon l'une quelconque des revendications 15 à 19, **caractérisé en ce qu'**une plaque de compression (56) est prévue sous la base de refroidissement (22), ladite plaque de compression (56) étant de préférence fixée à la batterie et déformant élastiquement la base de refroidissement (22) entre la batterie et la plaque de compression (56).

21. Ensemble de batterie de commande de véhicule (100) selon la revendication 20, **caractérisé en ce qu'**une partie déformée de façon élastique ou plastique est prévue entre la plaque de compression (56) et la plaque de contact (24) afin de compenser les tolérances en direction du côté plat (18).
